# EUROPEAN PATENT APPLICATION

(11) **EP 2 149 782 A2**
(43) Date of publication of application: **03.02.2010**
(21) Application number: 09166138.9
(22) Date of filing: 22.07.2009
(51) Int. Cl.: G01C 19/72

(54) **Fiber optic gyroscope**

(30) Priority: 29.07.2008 US 182027
(71) Applicant: Honeywell International Inc., Morristown, NJ 07962 (US)
(72) Inventor: Thorland, Rodney H., Morristown, NJ 07962-2245 (US); Seiber, Bruce A., Morristown, NJ 07962-2245 (US); Detry, James F., Morristown, NJ 07962-2245 (US); Sebby-Strabley, Jennifer S., Morristown, NJ 07962-2245 (US)
(74) Representative: Buckley, Guy Julian

(57) **Abstract**

An imporved resonator fiber-optic gyro (RFOG). An example RFOG (100) includes a closed-coil resonator (102) where counter-propagating laser beams arc done by fiber couplers (110, 112, 114). Signals are extracted from the ring resonator using other fiber couplers. The fiber couplers may be fiber spliced couplers, free-space fiber-to-fiber coupling elements or comparable coupling devices. A silicon structure may be used to align components of the gyro or just the coupling elements. The resonator includes a hollow-core fiber.

## Description

### BACKGROUND OF THE INVENTION

Gyros have been used to measure rotation rates or changes in angular velocity about an axis.

In a resonator fiber optic gyro (RFOG), the counter-propagating light beams are monochromatic and recirculate through multiple turns of the coil and for multiple passes through the coil using an external recirculator such as a reflective device. The beam generating device typically modulates and/or shifts the frequencies of each of the counter-propagating light beams so that the resonance frequencies of the resonant coil may be observed. The resonance frequencies for each of the CW and CCW paths through the coil are based on a constructive interference of successively recirculated beams in each optical path. A rotation of the coil produces a shift in the respective resonance frequencies of the resonant coil and the frequency difference associated with tuning the CW beam and CCW beam frequencies to match the coil's resonance frequency shift due to rotation indicates the rotation rate. A reflective mirror may be used to recirculate the counter-propagating light beams in the coil but this typically reduces the signal-to-noise ratio from losses generated at the transition from the mirror to the coil.

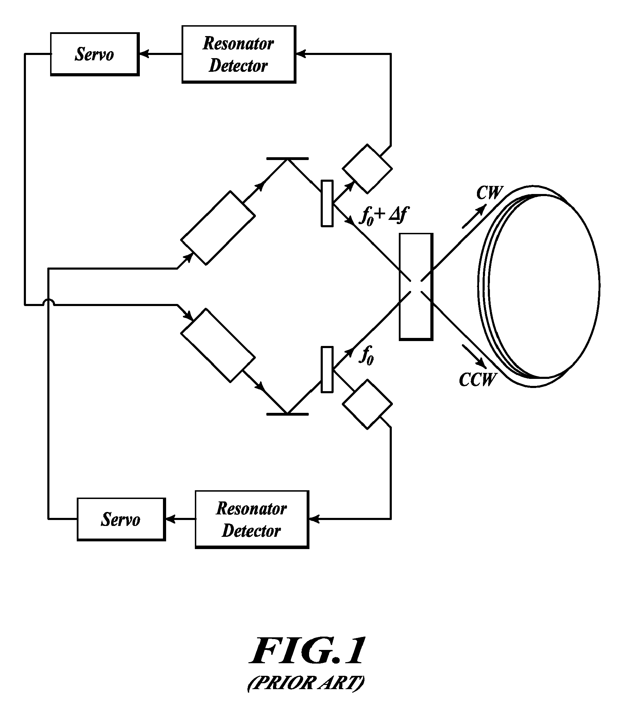

Accordingly, it is desirable to provide a fiber optic gyro capable of measuring rotational rates with an accuracy sufficient for navigation systems. In addition, it is desirable to provide a high accuracy fiber optic gyro for integration with relatively small platforms and made relatively inexpensively. The RFOG's key to getting good performance for a given coil diameter is to have low fiber-to-fiber coupling loss so that the light makes many trips through the fiber. The prior art in this field, shown in FIGURE 1, uses a 98% reflective mirror to do the fiber-to-fiber coupling. While this architecture uses the advantage that reflective mirror coatings can be made very precisely with multiple dielectric coatings, it suffers a serious disadvantage, namely that it is difficult to insure the two fiber ends are aligned to each other. An implementation of this design would require time consuming and expensive active and by-hand alignments.

Another coupling design is shown in FIGURE 2. This is an implementation described in copending U.S. Patent Application Serial No. 11/969,822 filed January 4, 2008.

### SUMMARY OF THE INVENTION

The present invention provides an improved resonator fiber-optic gyro (RFOG). An example RFOG includes a closed-coil resonator where counter-propagating laser beams are done by fiber couplers. Signals are extracted from the ring resonator using other fiber couplers.

The fiber couplers may be fiber spliced couplers, free-space fiber-to-fiber coupling elements. A silicon structure may be used to align components of the gyro or just the coupling elements.

### BRIEF DESCRIPTION OF THE DRAWINGS

Preferred and alternative embodiments of the present invention are described in detail below with reference to the following drawings:

FIGURE 1 is a schematic view of an example prior art system;

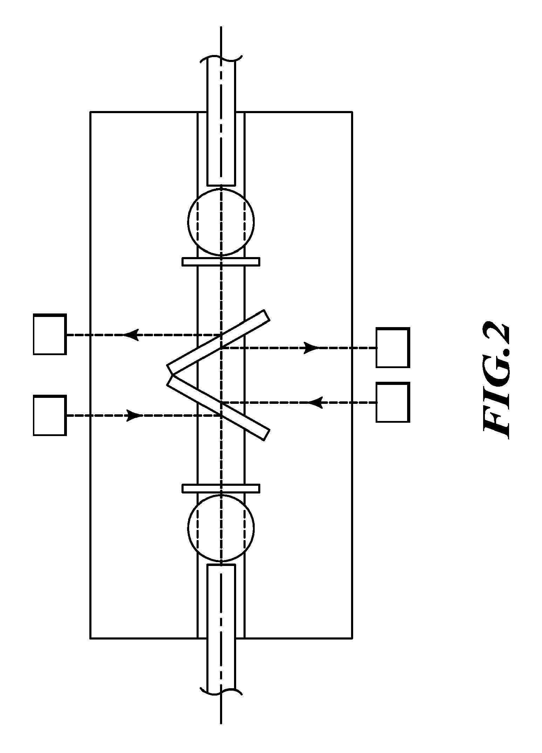

FIGURE 2 is a lens coupling system used in a copending application;

FIGURE 3 is a schematic view of an example system formed in accordance with an embodiment of the present invention; and

FIGURE 4 illustrates a blown up view of the system shown in FIGURE 2.

### DETAILED DESCRIPTION OF THE INVENTION

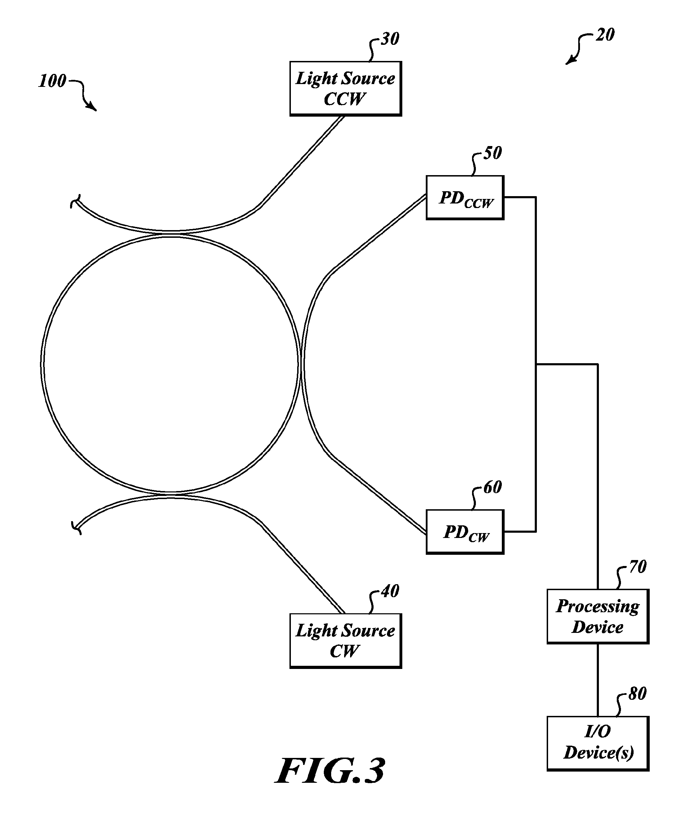

FIGURE 3 illustrates an example resonator fiber-optic gyro (RFOG) 20. The RFOG 20 includes a closed coil resonator 24 that is optically coupled to a counterclockwise (CCW) light source 30, a clockwise (CW) light source 40 and sensors (e.g., a CCW photodiode 50 and a CW photodiode 60). The photodiodes 50 and 60 are in data communication with a processing device 70. The processing device 70 is in data communication with a input/output device 80. Because the closed-coil resonator 24 is a closed optical component, in other words the free ends of the resonator are optically joined, the problems associated with fiber-plus-free space optic designs are avoided. In one embodiment, the closed coil resonator 24 is a hollow-core photonic-bandgap fiber (PBF).

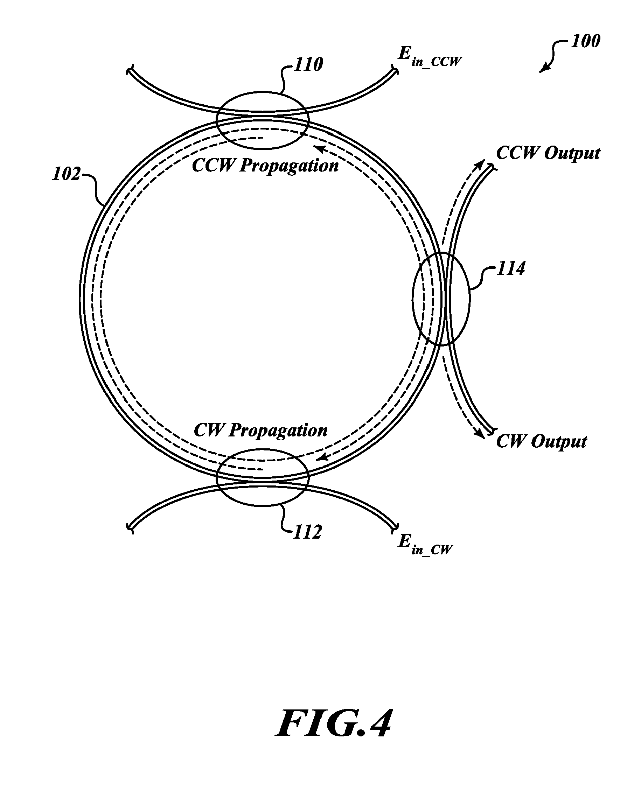

FIGURE 4 illustrates the resonator 24 of FIGURE 3 that includes optical couplers 110, 112 and 114. The optical coupler 110 allows the light generated by the CCW light source 30 (E_{in_ccw}) to be introduced into the resonator 24 in a counter clockwise direction. The optical coupler 112 allows the light produced by the CW light source 40 (E_{in_cw}) to be received by the resonator 24 thus producing a light signal within the resonator 24 in a clockwise direction. The optical coupler 114 allows CW and CCW light in the resonator 24 to exit the resonator 24 and be received by the respective photodiodes 50, 60.

Examples of the optical couplers 110, 112, 114 may include fiber splicing optical couplers and very short free-space fiber-to-fiber coupling elements. The coupling element provides a spacing of a few microns.

The ends of the hollow core fiber resonator 24 are joined in any of a number of different manners. For example, an optically compliant epoxy is used to bond the ends together. In another example, the ends are aligned in a micro-machined silicon structure. The silicon structure may include precision etched v-grooves sized to receive the ends of the fiber coil, splice together, laser welding, and/or use optical fiber connectors. The ends of the resonator 24 may also be bonded in a manner that allows a gap to exist between the fiber ends.

In one embodiment, the couplers are non-mirror/beam splitter input/output optical couplers that allow for evanescent coupling between the resonator 24 and the fiber leads connected to the light sources 30, 40 or the sensors 50, 60. The evanescent coupling can occur at or near a gap formed between ends of the resonator 24 (i.e., a break in the fiber loop) and the fiber leads. In this embodiment, there is not a need to couple the ends of the resonator 24 together as described above.

In another embodiment, evanescent coupling occurs when the resonator 24 is located adjacent to the fiber lead. This can be accomplished by removing a section of cladding of the resonator 24 and/or the fiber lead and placing the partially exposed fibers in close proximity to each other. A significant fraction of the cladding thickness is removed to accomplish this coupling.

In one embodiment, the resonator 24 is integrated into a prefabricated structured silicon chip/substrate. The chip is formed to precisely receive the resonator 24 and the couplers 110, 112 and 114. This would improve the accuracy of aligning the components, thus reducing alignment errors and improving sensitivity of the RFOG.

## Claims

1. A gyro device comprising:
at least one light source (30, 40) having first and second optical communication devices;
a closed loop photonic-bandgap fiber (PBF) resonator (102);
first and second sensors (50, 60) having an associated second optical communication device;
a processing device (70) in data communication with the first and second sensors; and
at least one optical coupler (110, 112, 114) configured to optically couple light from the at least one light source to the resonator or from the resonator to the first and second sensors.

2. The device of Claim 1, wherein the at least one optical coupler performs evanescent coupling between the resonator and the optical communication devices.

3. The device of Claim 1, wherein the at least one light source produces a light signal that is coupled into the resonator in a counterclockwise direction and a light signal that is coupled into the resonator in a clockwise direction.

4. The device of Claim 3, wherein the first sensor receives a light signal associated with the counterclockwise rotating light signal within the resonator, the second sensor receives a light signal associated with the clockwise rotating light signal in the resonator.

5. The device of Claim 1, wherein the resonator further comprises at least two ends that are optically coupled to each other, further comprising a silicon structure configured to support at least a portion of the components of the device.

6. The device of Claim 5, wherein the silicon structure includes grooves for receiving at least the ends of the resonator, and wherein the resonator includes a hollow-core fiber.

7. The device of Claim 5, wherein the silicon structure includes components configured to position the resonator at a predefined distance from one of the first and second optical communication devices.

8. The device of Claim 1, wherein the optical coupler includes ends of the resonator that are separated by a predefined gap with one of the first and second optical communication devices being located in proximity to the gapped resonator ends.

9. The device of Claim 1, wherein the resonator includes a hollow-core fiber.

10. The device of Claim 1, wherein the device is one of a gyroscope, a chemical sensor or a radiation sensor.
